# FASCICULE DE BREVET EUROPEEN

(11) **EP 2 353 366 B1**
(45) Date de publication et mention de la délivrance du brevet: **21.03.2012**
(21) Numéro de dépôt: 11153174.5
(22) Date de dépôt: 03.02.2011
(51) Int. Cl.: A01G 3/037

(54) **Sécateur pour la taille des végétaux**
Astschere zum Schneiden von Pflanzen
Branch shear for cutting plants

(30) Priorité: 03.02.2010 FR 1000445
(43) Date de publication de la demande: 10.08.2011
(73) Titulaire: Infaco S.A.S, 81140 Cahuzac sur Vère (FR)
(72) Inventeur: Delmas, Daniel, 81140 Cahuzac sur Vère (FR)
(74) Mandataire: Ravina, Bernard

(56) Documents cités:
- EP-A1- 1 350 428
- EP-A1- 1 842 632
- EP-A1- 2 151 305
- WO-A1-2005/084416

## Description

### Domaine technique

La présente invention est du domaine des instruments à main électroportatifs utilisés pour la taille des végétaux et se rapporte plus particulièrement à un sécateur pour la taille de la vigne.

### État de la technique antérieure

On connaît de l'état de la technique des sécateurs pour la taille des végétaux. De tels sécateurs sont notamment connus des demandes de brevet EP-A-1 350 428 ; EP-A-2 151 305 ; WO 2005/084416 ; EP-A-1 842 632.

Les sécateurs comprennent un manche creux de préhension, une contre-lame fixe ou crochet et une lame de coupe mobile, motorisée, accouplée à un organe moteur électrique par l'intermédiaire d'une transmission de mouvement. Typiquement la lame mobile, au cours d'un cycle de coupe, est animée d'un mouvement de coupe circulaire alternatif, ce cycle de coupe étant déclenché par appui sur une gâchette que comporte le sécateur. La contre-lame ou crochet est solidarisée à une tête rigidement fixée au manche de préhension.

Le moteur électrique est habituellement logé dans le manche creux de préhension du sécateur. Ce moteur électrique comporte un arbre de sortie rotatif recevant en fixation un pignon d'entraînement en prise par l'intermédiaire de la transmission de mouvement avec un secteur denté solidaire de la lame de coupe mobile.

Habituellement la lame mobile de coupe est montée sur un support approprié comportant un talon arrière agencé en secteur denté prévu pour coopérer en engrènement avec la transmission de mouvement sus évoquée. Cette lame de coupe mobile est solidaire d'un axe de guidage.

Typiquement, l'axe de guidage de la lame est fixe par rapport à cette dernière et est monté de manière guidée en rotation dans un palier formé dans la tête. Cet axe est de plus doté d'une portée filetée prévue pour être engagée en vissage dans un taraudage du support de lame mobile. Il est apparu que cette disposition de montage d'axe conduit à la longue, sous l'effet de l'usure, à augmenter le jeu entre l'axe et son alésage de guidage. De cet inconvénient il en résulte un mauvais guidage de la lame de coupe mobile influant sur la qualité de la coupe réalisée.

En outre les sécateurs de l'art antérieur sont dotés au niveau de leur gâchette de déclenchement du cycle de coupe ou au niveau d'un organe associé à cette dernière, d'un aimant tandis que sur leur carcasse, en regard de l'aimant, ils reçoivent un capteur à effet Hall pour mesurer l'amplitude du champ magnétique de l'aimant et en déduire la position angulaire de la gâchette.

Le but d'une telle disposition est, par l'intermédiaire d'un circuit de commande, d'asservir la position angulaire de la lame mobile à la position angulaire de la gâchette et plus précisément d'asservir le mouvement de la lame mobile au mouvement de la gâchette.

L'inconvénient d'une telle façon d'opérer réside dans le fait que la position de la gâchette n'est pas mesurée mais est déduite, ce qui conduit à une moindre précision.

Enfin, il est apparu également utile de pouvoir régler de manière simple la valeur de croisement des lames afin de pouvoir compenser leur usure, ainsi que l'amplitude d'ouverture des lames.

### Exposé de l'invention

La présente invention a pour objet de résoudre les problèmes sus évoqués en mettant en oeuvre un sécateur comprenant un manche de préhension creux pourvu en extrémité distale d'une tête support portant une contre-lame par rapport à laquelle est articulée une lame motorisée montée sur un axe de guidage et dotée d'un talon agencé en secteur denté coopérant en engrènement avec un pignon moteur accouplé à une transmission de mouvement elle-même accouplée à l'arbre de sortie rotatif d'un moteur électrique logé dans le manche caractérisée en ce que l'axe de guidage est engagé de manière ajustée dans un alésage formé dans la tête et comporte une portée filetée prévue pour être engagée en vissage dans un taraudage traversant formé dans la contre-lame laquelle est par ailleurs immobilisée par rapport à la tête par un pion engagé d'une part dans un perçage de la tête et dans un perçage de la contre-lame, ces deux perçages étant formés à distance de l'axe de guidage en rotation.

Par vissage de l'axe, la contre-lame se trouve fermement appliquée contre la tête. Par ailleurs l'axe de guidage se trouve fermement maintenu tant par l'alésage de la tête que par le taraudage de la contre-lame ; est réalisé ainsi un encastrement de l'axe dans ces deux éléments, l'axe y étant maintenu en rotation.

Selon une autre caractéristique de l'invention, le pion d'immobilisation est constitué par une vis engagée par sa tige dans un alésage de la tête et dans un taraudage de la contre-lame, la tête de la vis venant en appui contre la tête support.

Une telle disposition facilite le remplacement de la contre-lame, cette opération étant opérée par démontage de la vis de blocage et de l'axe de guidage.

Selon une autre caractéristique de l'invention, l'axe de guidage est équipé d'une portée lisse prévue pour recevoir une bague de guidage sur laquelle est enfilée de manière ajustée la lame de coupe. Une telle disposition évite l'usure de l'axe et de la lame.

Selon une autre caractéristique de l'invention, la lame de coupe est formée par un élément tranchant et par un élément support recevant de manière amovible en fixation l'élément tranchant, le secteur denté d'entraînement étant formé dans l'élément support.

Cette disposition permet de ne remplacer que l'élément tranchant de la lame de coupe. Par ailleurs, cette disposition de montage amovible permet, en combinaison avec la possibilité de dépose de la contre-lame, d'équiper le sécateur d'un élément tranchant et d'une contre-lame de dimensions adaptées au travail envisagé.

Selon une autre disposition de l'invention, l'axe de guidage présente une portion filetée d'extrémité prévue pour recevoir un écrou de réglage de la pression de la lame contre la contre-lame, apte par vissage à s'engager vers le support de lame, une rondelle d'usure étant interposée entre ledit écrou et ledit support, ladite rondelle étant immobilisée en rotation sur l'axe de guidage.

L'immobilisation en rotation de la rondelle d'usure par rapport à l'axe de guidage s'oppose efficacement à toute transmission de couple de desserrage à l'écrou de réglage.

Selon encore une autre disposition de l'invention, l'axe de guidage au niveau de sa portion d'extrémité filetée, présente un taraudage axial, borgne, prévu pour recevoir une vis de serrage d'une rondelle frein apte à freiner la rotation de l'écrou de réglage.

Selon une autre caractéristique de l'invention, le manche de préhension est formé par la jonction de deux coques de protection selon un plan de joint longitudinal lesquelles recouvrent la tête. De plus la partie distale de celle des deux coques recouvrant le mécanisme d'entraînement de la lame de coupe est amovible.

Selon un second aspect de l'invention, le sécateur tel que défini comporte un aimant porté par la gâchette et un capteur magnétique apte à délivrer deux informations d'éloignement de l'aimant selon des coordonnées cartésiennes, ce capteur magnétique, par exemple magnéto résistif, étant connecté au circuit de commande du moteur.

L'avantage d'une telle disposition est qu'elle conduit à une meilleure précision dans la mesure de la position angulaire de la gâchette.

Selon une autre disposition de l'invention, la lame mobile comporte un aimant et est prévu un second capteur magnétique, par exemple magnéto résistif apte à détecter la position de cet aimant et par voie de conséquence la position angulaire de la lame mobile en position de fermeture. Une telle disposition est utilisée pour régler le degré de croisement des lames en position de fermeture.

Selon une autre caractéristique de l'invention, le circuit de commande pilote le moteur électrique par l'intermédiaire d'un circuit hacheur, ce circuit de commande émet un signal d'alimentation du moteur électrique et effectue une mesure de vitesse du moteur par traitement de ce signal d'alimentation, cette mesure de vitesse étant effectuée pendant des intervalles de temps où le courant est nul, dans les périodes de hachage. Par ailleurs, selon une autre caractéristique de l'invention, le circuit de commande est adapté à intégrer dans le temps cette mesure de vitesse afin de déterminer la position instantanée du moteur et par voie de conséquence la position des lames. Cette position est comparée à une valeur de consigne représentative d'une valeur d'ouverture intermédiaire choisie par l'utilisateur.

Ces dispositions permettent donc de régler l'amplitude d'ouverture des lames, cette amplitude pouvant correspondre à une pleine ouverture nécessaire pour la coupe de rameaux de diamètres importants ou bien à une ouverture partielle des lames pour, par exemple, réaliser la coupe de rameaux de faibles sections.

Selon encore une autre caractéristique de l'invention, le nombre de coupes effectuées par le sécateur est mémorisé. Est mémorisé aussi le nombre de coupes ayant conduit à un blocage des lames. Ces données, selon un autre aspect de l'invention, sont traitées statistiquement afin de donner une information relative au degré d'usure des lames.

### Description sommaire des figures et des dessins.

D'autres avantages et caractéristiques de l'invention apparaîtront à la lecture de la description d'une forme préférée de réalisation donnée à titre d'exemple non limitatif en se référant aux dessins annexés en lesquels :
- les figures 1, et 1 bis sont des vues en perspective d'un sécateur selon l'invention,
- la figure 2 est une vue en perspective du sécateur, la partie distale de l'une des coques constitutives du manche étant ôtée,
- la figure 3 est une vue en perspective du sécateur, les coques constitutives du manche étant ôtées,
- la figure 4 est une vue en coupe transversale du sécateur au niveau de l'axe de guidage,
- la figure 5 est une vue schématique du circuit de commande du moteur du sécateur.

### Meilleure manière de réaliser l'invention

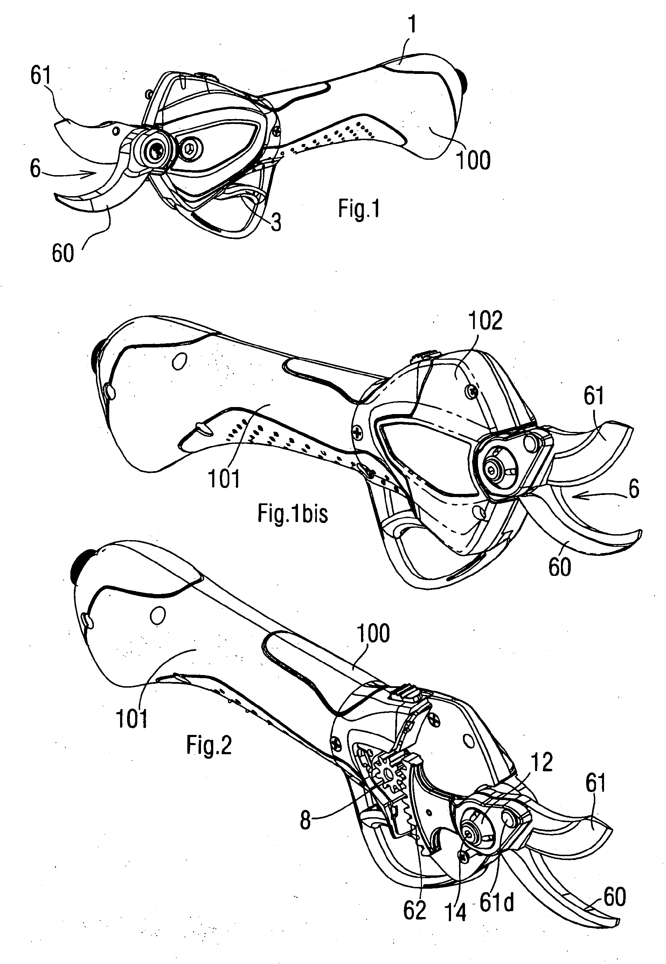

En figure 1, 1 bis et 2 est représenté en perspective un sécateur à main, motorisé, conforme à l'invention.

Ce sécateur comprend un manche de préhension creux 1, formé par la jonction de deux coques de protection 100, 101, selon un plan de joint longitudinal. Ce manche reçoit un moteur électrique 2 du type à courant continu activé à partir de l'action sur une gâchette pivotante 3, rappelée par ressort, installée en partie distale du manche. Le moteur électrique 2 est électriquement associé à un circuit de commande 4. Ce moteur électrique 2 est alimenté à partir d'une source d'énergie portative formée d'un jeu de batteries électriques logées dans des poches formés dans une ceinture adaptée, prévue pour être portée par l'utilisateur. Ce jeu de batteries est connecté par un câble électrique au circuit de commande 4.

Le manche 2 comporte en extrémité distale une tête 5 support formant platine, sur laquelle est monté un mécanisme de coupe 6. Ce mécanisme de coupe 6 comprend une contre-lame 60 fixe et une lame de coupe 61 mobile, motorisée, montée en rotation sur un axe 7 de guidage, supporté par la tête 5. On observe sur ces figures que la lame de coupe mobile 61 est dotée d'un talon arrière agencé en secteur denté 62 coopérant en engrènement avec un pignon denté d'entraînement 8 accouplé à une transmission de mouvement elle-même accouplée à l'arbre de sortie rotatif du moteur électrique 2. Cette transmission de mouvement comprend une roue dentée 9, à denture conique, fixée sur un axe de transmission installé sur des paliers formés dans la tête 5. Cet axe de transmission reçoit en fixation le pignon d'entraînement 8. La roue dentée 9 coopère en engrènement avec un pignon conique fixé sur l'arbre de sortie du moteur 2. On peut remarquer que la roue dentée 9 est située en regard de l'une des grandes faces de la platine constitutive de la tête 5 tandis que le mécanisme de coupe et le pignon denté 8 sont situés en regard de la face opposée.

Selon la forme préférée de réalisation, la lame de coupe mobile 61 est formée d'un élément tranchant 61 a et d'un élément support 61 b recevant de manière amovible en fixation l'élément tranchant, le secteur denté d'entraînement 62 étant formé dans l'élément support 61 b. Cet élément support 61 b est doté d'un manchon 61 c prévu pour être engagé de manière ajustée dans un alésage traversant formé dans l'élément tranchant 61 a. Pour immobiliser en rotation l'élément tranchant 61 a par rapport à l'élément support 61 b est prévue une goupille 61d (Fig.2) engagée dans un alignement de perçages formé d'un premier perçage traversant pratiqué dans l'élément tranchant et d'un second perçage traversant formé dans l'élément support.

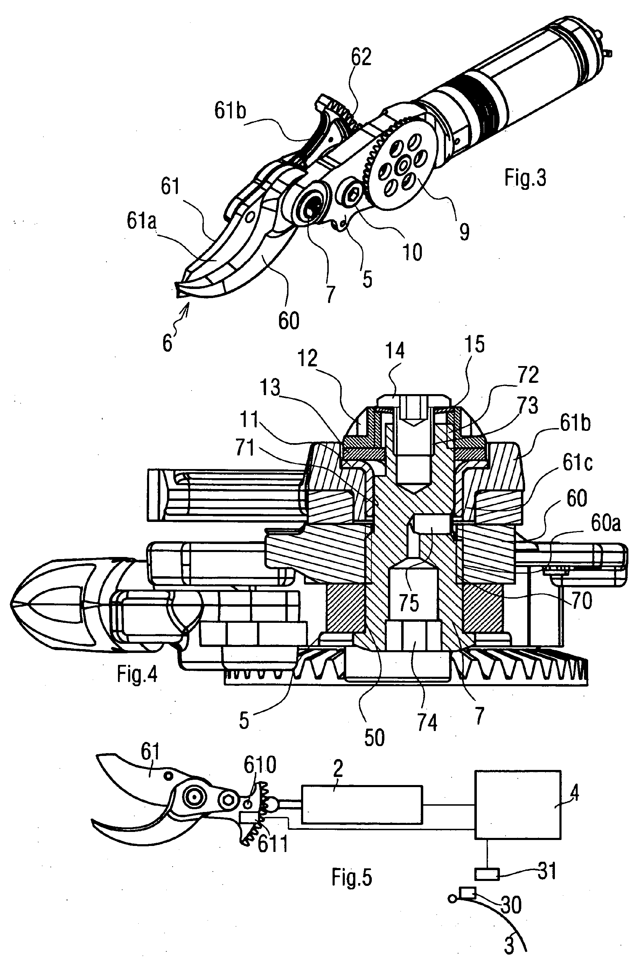

Comme on peut le voir en figure 4, l'axe de guidage 7 est engagé de manière ajustée dans un alésage traversant 50 formé dans la tête 5 et comporte un épaulement d'extrémité, d'appui, prévu pour venir se loger dans un lamage formé dans ladite tête. En outre cet axe de guidage 7 est doté d'une portée filetée 70 prévue pour être engagée en vissage dans un taraudage traversant 60a formé dans la contre-lame 60. Par vissage de l'axe, la contre-lame 60 est fermement appliquée contre la tête 5. Pour compléter l'immobilisation de la contre-lame en interdisant toute rotation de cette dernière autour de l'axe de guidage 7, est prévu un pion d'immobilisation 10 engagé d'une part dans un perçage de la tête 5 et dans un perçage de la contre-lame 60, ces deux perçages étant formés à distance de l'axe de guidage en rotation.

Dans une forme pratique de réalisation, le pion d'immobilisation 10 est constitué par une vis engagée par sa tige filetée dans un alésage de la tête et dans un taraudage de la contre-lame 60, la tête de cette vis venant en appui contre la tête support 5.

Dans le prolongement de la portée filetée 70, l'axe de guidage 7 est équipée d'une portée lisse 71 prévue pour recevoir une bague de guidage 11 sur laquelle est enfilée de manière ajustée la lame de coupe mobile 61. Dans la forme pratique de réalisation, la bague de guidage 11 est engagée dans le manchon 61 c que présente l'élément support 61 b.

L'axe de guidage 7, dans le prolongement de la portée lisse 71, présente une portion filetée d'extrémité 72 sur laquelle est vissé un écrou 12 de réglage de la pression de la lame 61 contre la contre-lame 60, le réglage de cette pression étant obtenu par vissage de l'écrou. Avantageusement cet écrou 12 pénètre dans un lamage formé dans l'élément support 61 b que présente la lame mobile 61. Entre l'écrou 12 et le fond de ce lamage est disposée une rondelle d'usure 13, cette rondelle est enfilée sur l'axe de guidage 7 et y est immobilisée en rotation. À cette fin, l'axe 7, dans sa portion filetée 72, est doté d'un méplat et l'alésage de la rondelle présente également un méplat prévu pour venir en correspondance avec le méplat de la portion filetée. Cette disposition s'oppose à toute rotation de la rondelle 13 par rapport à l'axe de guidage 7.

Selon une autre disposition de l'invention, l'axe de guidage au niveau de sa portion d'extrémité filetée 72, présente un taraudage axial 73, borgne, prévu pour recevoir une vis de serrage 14 d'une rondelle frein 15 apte à freiner la rotation de l'écrou de réglage 12. On peut remarquer sur la figure 4 que cette rondelle 15 est du type cuvette et prend appui contre le fond d'un lamage formé dans l'écrou 12. Alternativement, en lieu et place de la rondelle cuvette sera prévu une rondelle épaisse écrasable afin de constituer frein.

Avantageusement, afin de lubrifier la portée lisse 71 et l'alésage interne de la bague de guidage, l'axe 7 est doté d'un perçage axial borgne 74 en relation de communication avec un ou plusieurs perçages radiaux 75 débouchant dans ladite portée. Avantageusement un graisseur d'un type connu est installé dans le perçage 74.

Comme on peut le voir, les coques de protection 100, 101, constitutives du manche, viennent recouvrir en grande partie la tête 5. La coque 100 par sa partie distale 102 vient recouvrir le pignon denté 8 et l'élément support 61 b de la lame de coupe mobile 61.

Les dispositions précédemment décrites facilitent la dépose du mécanisme de coupe 6 en vue de son remplacement, soit par un mécanisme de même caractéristiques dimensionnelles en cas d'usure prononcée, soit par un mécanisme de caractéristiques dimensionnelles différentes pour une meilleure adaptation du sécateur à la nature des travaux à accomplir. Pour encore faciliter ce remplacement la partie distale 102 de la coque 100 est amovible et est fixée par vis à la tête 5 et la coque 100, au droit du pion d'immobilisation 10, comporte un perçage traversant d'un diamètre suffisant pour permettre le passage de ce pion. En outre la tête de l'axe de guidage 7, l'écrou de réglage 12 et la vis de serrage 14 ne sont pas recouverts par les coques de protection.

Comme dit précédemment, le moteur électrique 2 est associé à un circuit de commande 4 lequel active le moteur dès que la gâchette 3 est actionnée.

Avantageusement, comme on peut le voir en figure 5, afin d'asservir la position angulaire de la lame mobile de coupe 61 à la position angulaire de la gâchette 3, cette dernière porte un aimant 30 et le sécateur est doté d'un capteur magnétique 31 par exemple du type magnéto résistif, apte à délivrer deux informations d'éloignement de l'aimant selon des coordonnées cartésiennes, ce capteur magnéto résistif étant connecté au circuit de commande 4 du moteur 2.

Selon une forme préférée de réalisation, la lame mobile 61 comporte un aimant 610 et est prévu un second capteur magnétique 611 du type magnéto résistif connecté au circuit de commande 4. Ce second capteur est apte à détecter la position de l'aimant 610 et par voie de conséquence la position angulaire de la lame mobile en position de fermeture. Une telle disposition est utilisée pour régler le degré de croisement des lames en position de fermeture.

Le circuit de commande 4 pilote le moteur électrique 2 par l'intermédiaire d'un circuit hacheur connu en soi. Ce circuit de commande comporte de plus un micro contrôleur, un circuit analogique numérique et des circuits mémoires. Le micro contrôleur commande le moteur électrique 2 en courant par l'intermédiaire d'un pilotage par commande du circuit hacheur en fonction du signal qu'il reçoit du capteur magnéto résistif 30 associé à la gâchette 3.

Avantageusement, le micro contrôleur effectue une mesure de vitesse du moteur par traitement de ce signal d'alimentation, cette mesure de vitesse étant effectuée pendant des intervalles de temps où le courant est nul, dans les périodes de hachage, par mesure de la force contre électromotrice produite par le moteur.

En outre, le micro contrôleur est adapté à intégrer dans le temps cette mesure de vitesse afin de déterminer la position instantanée de l'arbre de sortie du moteur et par voie de conséquence la position angulaire instantanée de la lame de coupe mobile par rapport à la contre-lame. Cette position est comparée par le micro contrôleur à une valeur de consigne préenregistrée en mémoire représentative d'une valeur d'ouverture intermédiaire choisie par l'utilisateur lors d'une phase d'initialisation.

Enfin le micro contrôleur est apte à comptabiliser séparément le nombre total de coupes réalisées et le nombre de coupes ayant conduit à un blocage des lames. Ainsi par traitement statistique et comparaison à des valeurs préétablies inscrites en mémoire, il sera possible de donner une information relative au degré d'usure des lames sachant qu'une usure prononcée conduit quasi systématiquement à un blocage. Ces informations seront stockées en mémoire et traitées par le micro contrôleur.

Il va de soi que la présente invention peut recevoir tous aménagements et variantes du domaine des équivalents techniques sans pour autant sortir du cadre du présent brevet.

## Revendications

1. Sécateur comprenant un manche de préhension creux (1) pourvu en extrémité distale d'une tête support (5) portant une contre-lame (60) par rapport à laquelle est articulée une lame de coupe motorisée (61) montée sur un axe de guidage (7) et dotée d'un talon arrière agencé en secteur denté (62) coopérant en engrènement avec un pignon d'entraînement (8) accouplé à une transmission de mouvement, elle-même accouplée à l'arbre de sortie rotatif d'un moteur électrique (2) logé dans le manche (1), **caractérisé en ce que** l'axe de guidage (7) est engagé de manière ajustée dans un alésage (50) formé dans la tête (5) et comporte une portée filetée (70) prévue pour être engagée en vissage dans un taraudage traversant (60a) formé dans la contre-lame (60) laquelle est par ailleurs immobilisée par rapport à la tête (5) par un pion (10) engagé d'une part dans un perçage de la tête (5) et dans un perçage de la contre-lame.

2. Sécateur selon la revendication 1, **caractérisé en ce que** le pion d'immobilisation (10) est constitué par une vis engagée par sa tige dans un alésage de la tête (5) et dans un taraudage de la contre-lame, la tête de la vis venant en appui contre la tête support (5).

3. Sécateur selon la revendication 1 ou la revendication 2, **caractérisé en ce que** la lame de coupe motorisée (61) est formée par un élément tranchant (61 a) et par un élément support (61 b) recevant de manière amovible en fixation l'élément tranchant (61 a), le secteur denté d'entraînement (62) étant formé dans l'élément support (61 b).

4. Sécateur selon l'une quelconque des revendications précédentes, **caractérisé en ce que** l'axe de guidage (7) est équipé d'une portée lisse (71) prévue pour recevoir une bague de guidage (11) sur laquelle est enfilée de manière ajustée la lame de coupe (61).

5. Sécateur selon l'une quelconque des revendications précédentes, **caractérisé en ce que** l'axe de guidage (7) présente une portion filetée (72) d'extrémité prévue pour recevoir un écrou (12) de réglage de la pression de la lame (61) contre la contre-lame (60), apte par vissage à s'engager vers le support de lame (61 b), une rondelle d'usure (13) étant interposée entre ledit écrou et ledit support de lame (61 b), ladite rondelle (13) étant immobilisée en rotation sur l'axe de guidage (7).

6. Sécateur selon la revendication précédente, **caractérisé en ce que** l'axe de guidage (7), au niveau de sa portion d'extrémité filetée, présente un taraudage axial, borgne (73) prévu pour recevoir une vis de serrage (14) d'une rondelle frein (15) apte à freiner la rotation de l'écrou de réglage (12).

7. Sécateur selon l'une quelconque des revendications précédentes, dont le manche est formé par la jonction de deux coques de protection (100), (101), selon un plan de joint longitudinal lesquelles recouvrent la tête (5) **caractérisé en ce que** la partie distale (102) de celle des coques recouvrant le mécanisme d'entraînement de la lame de coupe est amovible.

8. Sécateur selon l'une quelconque des revendications précédentes, comportant une gâchette (3), à partir de l'action sur laquelle le moteur (2) est activé par un circuit de commande (4) pour déclencher une opération de coupe, **caractérisé en ce que** la gâchette (3) porte un aimant (30) et que ledit sécateur est doté d'un capteur magnéto résistif (31) apte à délivrer deux informations d'éloignement de l'aimant selon des coordonnées cartésiennes, ce capteur magnétique (31) étant connecté au circuit (4) de commande du moteur (2).

9. Sécateur selon la revendication précédente, **caractérisé en ce que** la lame mobile (61) comporte un aimant (610) et que ledit sécateur comporte un second capteur magnétique (611) connecté au circuit de commande (4), apte à détecter la position de cet aimant et par voie de conséquence la position angulaire de la lame mobile (61) en position de fermeture.

10. Sécateur selon la revendication 8 ou la revendication 9, **caractérisé en ce que** le circuit de commande (4) pilote le moteur électrique (2) par l'intermédiaire d'un circuit hacheur, que ce circuit de commande émet un signal d'alimentation du moteur électrique (2) et effectue une mesure de vitesse du moteur (2) par traitement de ce signal d'alimentation, que cette mesure de vitesse est effectuée pendant des intervalles de temps où le courant est nul, dans les périodes de hachage.

11. Sécateur selon la revendication précédente, **caractérisé en ce que** le circuit de commande (4) est adapté à intégrer dans le temps la mesure de vitesse afin de déterminer la position instantanée de l'arbre de sortie du moteur (2) et par voie de conséquence la position angulaire de la lame de coupe mobile (61) et est adapté à comparer cette position à une valeur de consigne représentative d'une valeur d'ouverture intermédiaire choisie par l'utilisateur.

12. Sécateur selon l'une quelconque des revendications 8 à 11, **caractérisé en ce que** le circuit de commande (4) comporte un microcontrôleur apte à comptabiliser séparément le nombre total de coupes réalisées et le nombre de coupes ayant conduit à un blocage des lames afin que par traitement statistique et comparaison à des valeurs préétablies inscrites en mémoire, il soit possible de donner une information relative au degré d'usure des lames.

## Claims

1. Secateurs comprising a hollow gripping handle (1) provided at the distal end with a support head (5) carrying a counter-blade (60) with respect to which a motorised cutting blade (61) is articulated, mounted on a guide axle (7) and provided with a rear heel arranged on a toothed sector (62) cooperating meshingly with a driving pinion (8) coupled to a movement transmission, itself coupled to the rotating output shaft of an electric motor (2) housed in the handle (1), **characterised in that** the guide axle (7) is engaged so as to fit closely in a bore (50) formed in the head (5) and comprises a threaded surface (70) designed so as to be engaged screwed in a through tapping (60a) formed in the counter-blade (60), which is moreover immobilised with respect to the head (5) by a stud (10) engaged in a drilling in the head (5) and in a drilling in the counter-blade.

2. Secateurs according to claim 1, **characterised in that** the immobilisation stud (10) is formed by a screw engaged by its stem in a bore in the head (5) and in a tapping in the counter-blade, the head of the screw coming to bear against the support head (5).

3. Secateurs according to claim 1 or claim 2, **characterised in that** the motorised cutting blade (61) is formed by a slicing element (61a) and by a support element (61b) removably receiving, for fixing, the slicing element (61a), the driving tooth sector (62) being formed in the support element (61b).

4. Secateurs according to any one of the preceding claims, **characterised in that** the guide axle (7) is equipped with a smooth surface (71) designed to receive a guide ring (11) on which the cutting blade (61) is closely fitted.

5. Secateurs according to any one of the preceding claims, **characterised in that** the guide axle (7) has a threaded end portion (72) designed to receive a nut (12) for adjusting the pressure of the blade (61) against the counter-blade (60), able by screwing to engage towards the blade support (61b), a wear washer (13) being interposed between said nut and said blade support (61b), said washer (13) being immobilised with respect to rotation on the guide axle (7).

6. Secateurs according to the preceding claim, **characterised in that** the guide axle (7), at its threaded end portion, has a blind axial tapping (73) designed to receive a screw (14) for clamping a spring washer (15) able to restrict the rotation of the adjustment nut (12).

7. Secateurs according to any one of the preceding claims, the handle of which is formed by the junction of two protective shells (100), (101), on a longitudinal joint face, which cover the head (5), **characterised in that** the distal part (102) of the shell that covers the drive mechanism of the cutting blade is removable.

8. Secateurs according to any one of the preceding claims, comprising a trigger (3), by means of the action on which the motor (2) is activated by a control circuit (4) in order to trigger a cutting operation, **characterised in that** the trigger (3) carries a magnet (30) and **in that** said secateurs are provided with a magnetoresistive sensor (31) able to deliver two items of information for movement away of the magnet according to cartesian coordinates, this magnetic sensor (31) being connected to the circuit (4) controlling the motor (2).

9. Secateurs according to the preceding claim, **characterised in that** the movable blade (61) comprises a magnet (610) and **in that** said secateurs comprise a second magnetic sensor (611) connected to the control circuit (4), able to detect the position of this magnet and consequently the angular position of the movable blade (61) in the closed position.

10. Secateurs according to claim 8 or claim 9, **characterised in that** the control circuit (4) controls the electric motor (2) by means of a chopping circuit, **in that** this control circuit emits a signal supplying the electric motor (2) and makes a measurement of the speed of the motor (2) by processing this supply signal, and **in that** this speed measurement is made during intervals of time where the current is zero in the chopping periods.

11. Secateurs according to the preceding claim, **characterised in that** the control circuit (4) is able to integrate the speed measurement over time so as to determine the instantaneous position of the output shaft of the motor (2) and consequently the angular position of the movable cutting blade (61) and is able to compare this position with a set value representing an intermediate opening value chosen by the user.

12. Secateurs according any one of claims 8 to 11, **characterised in that** the control circuit (4) comprises a microcontroller able to separately count the total number of cuts made and the number of cuts that led to a locking of the blades so that, by statistical processing and comparison with pre-established values entered in memory, it is possible to give information relating to the degree of wear on the blades.

## Patentansprüche

1. Gartenschere umfassend einen hohlen Griff (1), der am distalen Ende mit einem Stützkopf (5) versehen ist, der ein Gegenblatt (60) trägt, in Bezug zu dem ein Motor betriebenes Schneidblatt (61) angelenkt ist, das an einer Führungsachse (7) montiert und mit einem hinteren Endstück versehen ist, das einen Zahnsektor (62) bildet, der durch Eingreifen mit einem Antriebszahnrad (8) zusammenwirkt, das mit einem Getriebe gekoppelt ist, welches mit der Ausgangsdrehwelle eines Elektromotors (2) gekoppelt ist, der in dem Griff (1) angeordnet ist, **dadurch gekennzeichnet, dass** die Führungsachse (7) in einer Bohrung (50), die in dem Kopf (5) ausgebildet ist, eingepasst eingreift und einen Gewindeabschnitt (70) umfasst, der dazu vorgesehen ist, durch Verschrauben in ein Quergewinde (60a), das in dem Gegenblatt (60) ausgebildet ist, einzugreifen, welches Gegenblatt überdies in Bezug zum Kopf (5) durch einen Stift (10) festgestellt ist, der einerseits in einer Bohrung des Kopfes (5) und in eine Bohrung des Gegenblattes eingreift.

2. Gartenschere nach Anspruch 1, **dadurch gekennzeichnet, dass** der Feststellstift (10) von einer Schraube gebildet ist, die mit ihrem Schaft in eine Bohrung des Kopfes (5) und in ein Gewinde des Gegenblattes eingreift, wo der Kopf der Schraube am Stützkopf (5) zur Anlage gelangt.

3. Gartenschere nach Anspruch 1 oder Anspruch 2, **dadurch gekennzeichnet, dass** das Motor betriebene Schneidblatt (61) von einem Schneidelement (61a) und von einem Stützelement (61b) gebildet ist, auf dem das Schneidelement (61a) abnehmbar befestigt wird, wobei der Zahnantriebssektor (62) in dem Stützelement (61b) ausgebildet ist.

4. Gartenschere nach einem der vorhergehenden Ansprüche, **dadurch gekennzeichnet**, das die Führungsachse (7) mit einem glatten Bereich (71) versehen ist, der dazu vorgesehen ist, einen Führungsring (11) aufzunehmen, in den das Schneidblatt (61) eingepasst wird.

5. Gartenschere nach einem der vorhergehenden Ansprüche, **dadurch gekennzeichnet, dass** die Führungsachse (7) einen Gewindeabschnitt (72) mit einem Ende aufweist, das dazu vorgesehen ist, eine Mutter (12) zur Einstellung des Drucks des Schneidblattes (61) an das Gegenblatt (60) aufzunehmen, die durch Schrauben in die Blattstütze (61b) eingreifen kann, wobei ein Verschleißplättchen (13) zwischen der Mutter und der Blattstütze (61b) eingesetzt ist, wobei das Plättchen (13) auf der Führungsachse (7) drehfest montiert ist.

6. Gartenschere nach dem vorhergehenden Anspruch, **dadurch gekennzeichnet, dass** die Führungsachse (7) im Bereich ihres Gewindeendabschnittes ein Axialgrundgewinde (73) aufweist, das dazu vorgesehen ist, eine Klemmschraube (14) einer Bremsscheibe (15) aufzunehmen, die die Drehung der Einstellmutter (12) bremsen kann.

7. Gartenschere nach einem der vorhergehenden Ansprüche, deren Griff durch die Verbindung von zwei Schutzschalen (100), (101) entlang einer Längsverbindungsebene gebildet ist, welche den Kopf (5) bedecken, **dadurch gekennzeichnet, dass** der distale Teil (102) jener der Schalen, die den Antriebsmechanismus des Schneidblattes bedeckt, abnehmbar ist.

8. Gartenschere nach einem der vorhergehenden Ansprüche, umfassend einen Drücker (3), durch dessen Betätigung der Motor (2) durch eine Steuerschaltung (4) aktiviert wird, um einen Schneidvorgang auszulösen, **dadurch gekennzeichnet, dass** der Drücker (3) einen Magneten (30) trägt, und dass die Gartenschere mit einem Magnetwiderstandsfühler (31) versehen ist, der geeignet ist, zwei Informationen über die Entfernung des Magneten nach kartesischen Koordinaten zu liefern, wobei dieser Magnetfühler (31) an die Steuerschaltung (4) des Motors (2) angeschlossen ist.

9. Gartenschere nach dem vorhergehenden Anspruch, **dadurch gekennzeichnet, dass** das bewegliche Blatt (61) einen Magneten (610) umfasst, und das die Gartenschere einen zweiten Magnetfühler (611) umfasst, der an die Steuerschaltung (4) angeschlossen und geeignet ist, die Position dieses Magneten und folglich die Winkelposition des beweglichen Blattes (61) in der Verschlussposition zu erfassen.

10. Gartenschere nach Anspruch 8 oder Anspruch 9, **dadurch gekennzeichnet, dass** die Steuerschaltung (4) den Elektromotor (2) mit Hilfe einer Zerhacker-Schaltung steuert, dass diese Steuerschaltung ein Versorgungssignal des Elektromotors (2) entsendet und eine Geschwindigkeitsmessung des Motors (2) durch Bearbeitung dieses Versorgungssignals durchführt, dass diese Geschwindigkeitsmessung während Zeitintervallen, in denen der Strom gleich Null, ist, in den Zerhacker-Perioden stattfindet.

11. Gartenschere nach dem vorhergehenden Anspruch, **dadurch gekennzeichnet, dass** die Steuerschaltung (4) dazu vorgesehen ist, die Geschwindigkeitsmessung zeitlich einzuordnen, um die momentane Position der Ausgangswelle des Motors (2) und folglich die Winkelposition des beweglichen Schneidblattes (61) zu bestimmen, und dazu vorgesehen ist, diese Position mit einem Sollwert zu vergleichen, der für einen vom Benutzer gewählten Zwischenöffnungswert repräsentativ ist.

12. Gartenschere nach einem der Ansprüche 8 bis 11, **dadurch gekennzeichnet, dass** die Steuerschaltung (4) einen Mikrokontroller umfasst, der geeignet ist, die Gesamtzahl von durchgeführten Schnitten und die Schnittzahl, die zu einer Feststellung der Schneidblätter geführt hat, getrennt zu verbuchen, damit es durch statistische Bearbeitung und Vergleich mit im Speicher aufgezeichneten vorher erstellten Werten möglich ist, eine relative Information über den Verschleißgrad der Schneidblätter zu liefern.
